# EUROPEAN PATENT SPECIFICATION

(11) **EP 2 746 602 B1**
(45) Date of publication and mention of the grant of the patent: **20.09.2017**
(21) Application number: 12198369.6
(22) Date of filing: 20.12.2012
(51) Int. Cl.: F16C 3/10

(54) **Crankshaft with assembled counterweights**
Kurbelwelle mit montierten Gegengewichten
Vilebrequin avec contrepoids assemblé

(43) Date of publication of application: 25.06.2014
(73) Proprietor: ThyssenKrupp Metalúrgica Campo Limpo Ltda., 13231-900 Campo Limpo Paulista-SP (BR)
(72) Inventor: Crodelino, Amadeu, Jundiai, SP, 13.216-00 (BR)
(74) Representative: thyssenkrupp Intellectual Property GmbH

(56) References cited:
- DE-A1- 3 925 181
- JP-A- 2009 197 979
- JP-U- H0 177 121

## Description

The present invention relates to a crankshaft for an internal combustion machine having crank webs in between bearing journals comprising at least one pin bearing journal and main bearing journals defining an axis of rotation, whereas the crank webs feature assembled counterweights for balancing at least the crankshaft.

### PRIOR ART

Commonly, a crankshaft contains two ore more centrally located coaxial cylindrical parts, known as main bearing journals, whereas the centers of the main bearing journals define an axis of rotation, and the crankshaft is rotatable supported in this axis in a crank housing of the internal combustion machine. When the machine is running, the crankshaft rotates in the axis of rotation. Next to the main bearing journals the crankshaft features one or more offset cylindrical pin bearing journals, also known as rod bearing journals. Crankshafts are designed to convert the up and down motion of the pistons in the internal combustion machine into the horizontal rotation of the crankshaft in the axis of rotation. The crankshaft is one solid piece made from cast iron or forged steel and the counterweights, which are also defined as parts of the crankshaft, are assembled to the crank webs. Some internal combustion machines feature countershafts, and the weight and rotation direction of the countershafts are critical for a proper operation of the machine. This countershafts must have weights equivalent in magnitude to the secondary inertial forces of all the cylinders.

The counterweights balance the weight of the crankshaft, pistons and connecting rods under operation, offsetting the weight of the components, and are thought to offset the inertial forces and to keep the transmission of power from the combustion under equilibrium. At any point in the assembly rotation, the sum of all forces is roughly equal to zero. If the counterweights have the correct weight to balance the described components, the system is considered as balanced. When the counterweights themselves are capable to balance the crankshaft, the crank system is considered internally balanced.

When crankshafts are a one piece solid comprising counterweights in one part, the counterweights are usually integrated in the component of the main body of the crankshaft. These crankshafts tend to be very expensive due to the large mount of material removal which needs to be done by using lathes and milling machines, also requiring high material costs and additional heat treatment.

Assembled counterweights are alternatives to integrated counterweights and solve the problems cited above for providing advantages of cost reduction by forging materials saving of the billet, press energy saving and by the use of smaller machining areas.

US 6,959,683, B2 teaches the assembling of counterweights to crank webs of a crankshaft, and the counterweights feature a ring form surrounding the entire crank webs which are arranged between the bearing journals. This design of counterweights leads to an unnecessary increase of total weight, because the part of the counterweights facing to the pin bearing journals is not part of balancing masses and must be balanced additionally. Moreover, the tight fitting of the ring formed counterweights to the crank webs requires small and expensive clearances.
US 2009/0277414 A1 features a crankshaft for an internal combustion machine having crank webs, and counterweights are assembled to the crank webs opposite to the pin bearing journals of the crankshaft. The assembling bases on the use of screws, leading to expensive fitting dimensions and the need of threaded holes. Moreover, the assembly process is extensive.

JP H01-77121 U discloses a crankshaft according to the preamble of claim 1.

### DISCLOSURE OF INVENTION

Thus, the invention has the objective to eliminate the above mentioned disadvantages. In particular it is an objective of the invention to provide a crankshaft with counterweights featuring a simple assembly to the crank webs, in particular it is the objective of the invention to provide counter weights featuring a high weight, while lightening the weight of the crank web.
This objective is achieved by a crankshaft as taught by claim 1 of the present invention. Preferred embodiments of the invention are defined in the sub claims.
The invention discloses a crankshaft with crank webs comprising a first assembling face and with counterweights comprising a second assembling face, whereas the first assembling face is arranged opposite to the pin bearing journal in relation to the axis of rotation of the crankshaft, and whereas the first and the second assembling face feature a form-fitted connection between the crank web and the counterweight.

The form-fitted connection between the crank web and the counterweight according to the invention is based on a positive-negative-fitting, and the positive and negative geometries are formed by the faces, which are in opposition to each other when the counterweight is assembled to the crank web. Accordingly, the form-fitted connection forms a mounting arrangement of the counterweight to the crank web, while the body of the counterweight is hanging free on the end face of the crank web and projects into the opposite direction of at least one pin bearing journal.

The use of a form-fitted connection with a first assembling face and a second assembling face allows the assembly of the counterweight to the crank webs without the use of screws. This leads to a cost reduction due to the cheaper fastening principal while an unintentional release of the counterweights is avoided.

According to the invention the form-fitted connection between the counterweights and the crank webs comprises a dovetail connection with a dove tail formed by the first assembling face and a dove tail retainer formed by the second assembling face. The dove tail and the dove tail retainer form the positive/negative geometries, which are inversed to each other and according to a preferred embodiment the positive/negative geometries are formed by a dove tail and a dedicated dove tail retainer.

According to another embodiment, the dove tail is formed by the second assembling face arranged on the counterweights, while the dove tail retainer is formed by the first assembling face arranged on the crank web.

According to yet another embodiment the form-fitted connection between the counterweights and the crank webs comprises a T-bar connection with a T-bar formed by the first assembling face and a T-bar retainer formed by the second assembling face. In another embodiment the T-bar is formed by the second assembling face arranged at the counterweights and the T-bar retainer is formed by the first assembling face arranged at the crank web.
The geometry of the form-fitted connection with a positive and a negative face which form complimentary geometries to each other are not limited to special dove tail or T-bar geometries, and the form-fitted connection can base on any different undercut geometry which is suited to form a positive/negative-fitting for assembling a counterweight to a crank web. According to yet another embodiment the form-fitted connection between the counterweights and the crank webs may comprise a mushroom head geometry with a mushroom head formed by the first assembling face or the second assembly face and a mushroom head retainer formed by the first assembling face or by the second assembling face.

According to the present invention the connection between the counterweight and the crank webs feature at least one additional fitting element. The crank webs feature at least one first hole and the counterweights feature at least one second hole in a complimentary arrangement of the first hole, whereas the additional fitting element is inserted in the holes and extends both into the first hole and into the second hole. The additional fitting element can be formed by a metal pin with a cylindrical or e.g. a tapered geometry.

According to the invention the first hole features a first center axis and the second hole features a second center axis, whereas the center axis are angular misaligned to each other. The additional fitting element is fitted into the holes under an elastic and/or a plastic material strain. The rising deformation of the fitting element, when the element is pressed into the misaligned holes, leads to a tight connection and the metal pin features a self-locking arrangement within the holes.

According to a preferred embodiment the misaligned angle between the first center axis and the second center axis amounts to 0,01° to 5°, preferably to 0,1° to 1° and most preferred to 0,25°. In particular the metal pin can be made of a material of decreased strength, and the elastic and/or plastic material strain happens in the material of the metal pin, when the pin is pressed into the misaligned holes.

With another improvement the at least one first hole in the crank web is performed as a stud hole and the at least one second hole in the counterweight is performed as a through bore-hole.

The first hole in the crank web which is performed as a stud hole is located in the lateral face of the dove tail and the second hole in the counterweight performed as through bore-hole is located in the wrap-around section of the dove tail retainer. The alignment of the holes and thus the direction of the main extension, in which the metal pin is arranged in the holes, permit a loss-proof arrangement, and when the crankshaft rotates in the axis of rotation, the centrifugal force affecting the metal pin presses the metal pin against the bottom of the stud hole.

According to yet another embodiment the material of the counterweight is less noble than the material of the crankshaft. The counterweights are made of any materials endowed with specific weight, in order to ensure the balancing of the crankshaft and also allow the downsizing of the engine by using a more heavy material and/or a specific geometry whereas the center of mass is positioned on a most advantage position. Preferably, counterweights are made of material less expansive than those used to manufacture the crankshaft, since its operational conditions are less critical than once for the crankshaft. It allows the obtaining of counterweight with different and/or complex shapes and also allows a less expansive crankshaft, once less expansive materials can be used to provide the counterweights.

The invention meets the objective to be solved, and the first achievement is the reduction of costs due to a cheaper assembling technique, in particular when screws for assembling the counterweights can be saved. Moreover, forging material can be saved, and the deformation degree can be lowered when manufacturing the crankshaft with assembled counterweights featuring increased weights.

The aforementioned components as well as the claimed components and the components to be used in accordance with the invention in the described embodiments are not subject to any special exception with respect to their size, shape, material selection and technical concept such that the selection criteria known in the pertinent field can be applied without limitations.

### PREFERRED EMBODIMENTS OF THE INVENTION

Additional details, characteristics and advantages of the object of the invention are disclosed in the sub claims and the following description of the respective figures, which show preferred embodiments in an exemplary fashion of the subject matter according to the invention in conjunction with the accompanying figures, in which:
- figure 1: shows a side-view of a crankshaft with assembled counterweights,
- figure 2: shows a cross-section of a crankshaft with an assembled counterweight to a crank web,
- figure 3: shows a detailed view of the form-fitted connection between the crank web and the counterweight,
- figure 4 to figure 7: shows different shapes of form-fitted connections between the crank web and different counterweights.

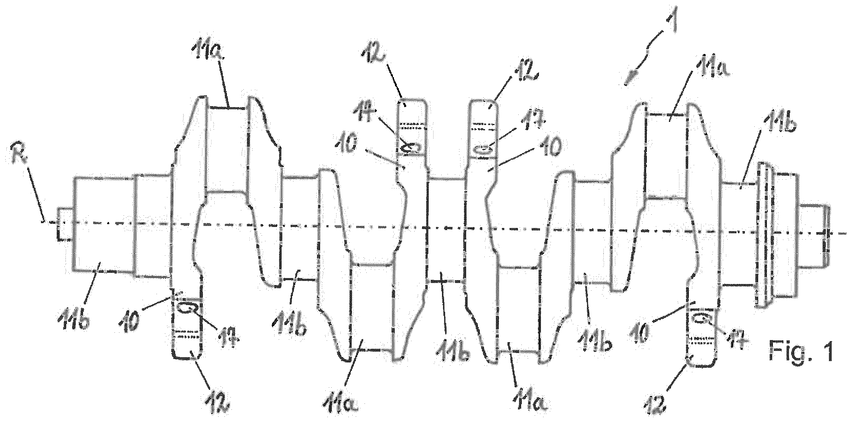

Figure 1 shows a side-view of a crankshaft 1 for an internal combustion machine having crank webs 10 in between bearing journals 11a and 11b. The bearing journals 11a form pin bearing journals 11a and the bearing journals 11b form main bearing journals 11b. The pin bearing journals 11a feature an offset and connecting rods can be connected to the pin bearing journals 11a in order to form a crank drive. The main bearing journals 11b are arranged to support the crankshaft 1 in a crank housing of the machine, and the main bearing journals 11b define a common axis of rotation R.

Between the pin bearing journals 11a and the main bearing journals 11b are arranged crank webs 10, and counterweights 12 are assembled to the crank webs 10 opposite to the offsetting arrangement of the pin bearing journals 11a.

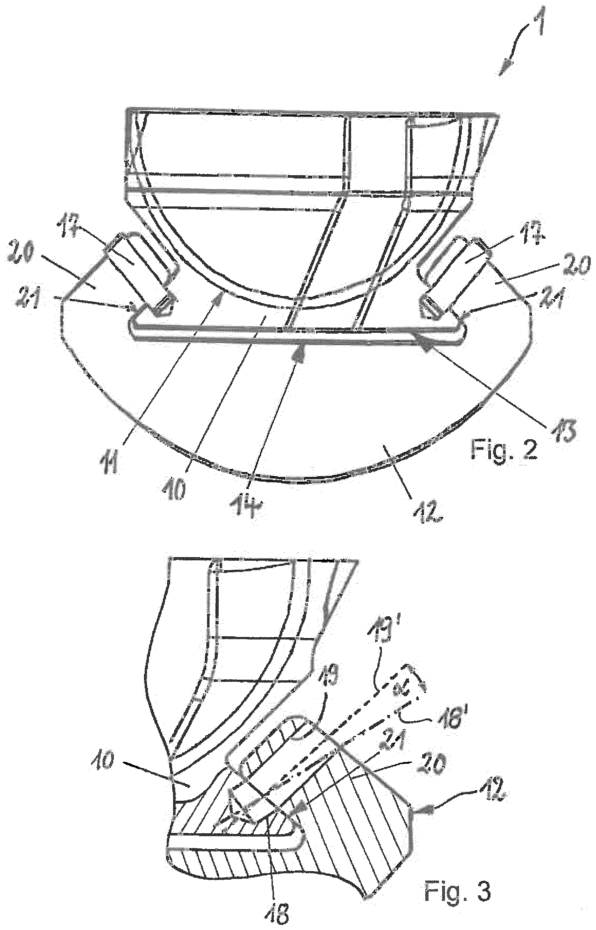

The assembling of the counterweights 12 to the crank webs 10 features a form-fitted connection, and the crank webs 10 comprise a first assembling face and the counterweights 12 comprise a second assembling face which is arranged opposite to the first assembling face. Within or between the assembling faces is formed the form-fitted connection. In order to secure the form-fitted connection additional fitting elements 17 are arranged in holes within the counterweights 12 and the crank webs 10 as shown in the following figure 2 and figure 3.

Figure 2 shows a cross-section of the crankshaft 1 in a section that the crank web 10 is shown in front of a bearing journal 11. The crank web 10 features a first assembling face 13, which forms a dove tail 13, and the counterweight 12 features a second assembling face 14, forming a dove tail retainer 14. The dove tail retainer 14 comprises wrap-around sections 20 wrapping around a supporting face 21 of the dove tail 13.

The dove tail 13 and the dove tail retainer 14 form a form-fitted connection basing on a positive-negative geometry, and the dove tail retainer 14 forms an undercut-geometry for the dove tail 13.

The body of the counterweight 12 forms a free hanging arrangement on the crank web 10, and thus the size and the weight of the counterweight 12 is not limited to any geometry of the counterweight assembling formed by the first assembling face 13 and the second assembling face 14.

As shown in figure 2 and shown in more detail in figure 3 between the counterweight 12 and the crank web 10 are arranged additional fitting elements 17, formed as metal pins 17. The metal pins 17 form an additional locking means, and in both wrap-around sections 20 of the dove tail retainer 14 are arranged metal pins 17.

In the supporting face 21 of the dove tail 13 is arranged a first hole 18 featuring a first center axis 18' and in the wrap-around section 20 is arranged a second hole 19 featuring a second center axis 19'. As shown in more detail in figure 3, the first center axis 18' is misaligned with respect to the second center axis 19'. The misalignment features a misalignment angle α.

When the metal pins 17 are pressed into the holes 18 and 19, in the metal pin 17 is caused an elastic and/or a plastic material strain due to the misalignment of the axis 18' and 19', and the elastic and/or plastic material strain leads to a self-locking arrangement of the element 17 within the holes 18 and 19, which is in a straight initial shape before being pressed into the holes.

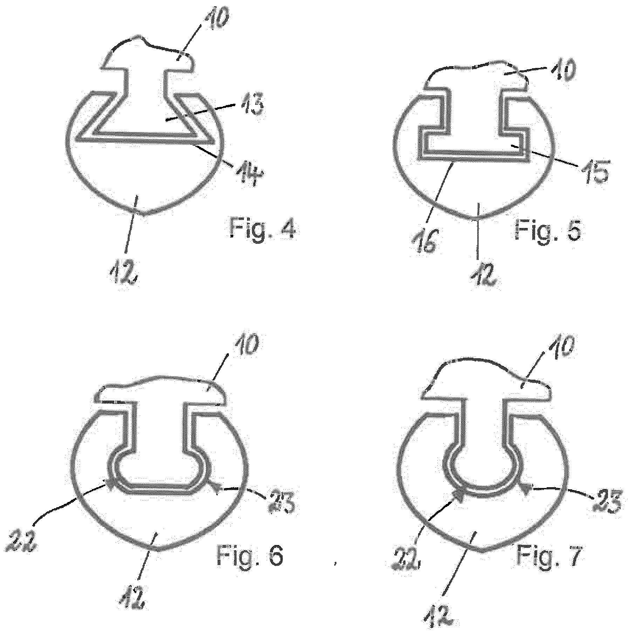

Figure 4 to figure 7 show different form-fitted connections between the crank web 10 and the counterweight 12. Figure 4 features a crank web 10 with a first assembling face 13 and the counterweight 12 features a second assembling face 14, and the first assembling face 13 forms a dove tail, and the second assembling face 14 forms a dove tail retainer as already described in conjunction with figure 2 and figure 3.
Figure 5 features another form-fitted connection between the crank web 10 and the counterweight 12, and the first assembling face 15 of the crank web 10 is formed as a T-bar, whereas the second assembling face 16 of the counterweight 12 is formed as a T-bar retainer. This T-bar connection forms the same undercut-geometry for assembling the counterweight 12 to the crank web 10.
Figure 6 and figure 7 feature different mushroom head geometries with a mushroom head 22 and an mushroom head retainer 23, whereas the mushroom head geometry according to figure 6 forms a larger lateral expanded form, and the mushroom head geometry according to figure 7 forms a ball-head shape which is retained in a ball pan in order to assemble the counterweight 12 to the crank web 10.
In conjunction with the form-fitted connection between the crank web 10 and the counterweight 12 according to figure 5 to figure 7, each form-fitted connection geometries are to be combined with an additional fitting element 17, e.g. performed as a metal pin 17.
The present invention is not limited by the embodiment described above, which is represented as an example only and can be modified in various ways within the scope of protection defined by the appending patent claims.

### List of numerals

- 1: crankshaft

- 10: crank web
- 11: bearing journal
- 11a: pin bearing journal
- 11b: main bearing journal
- 12: counterweight
- 13: first assembling face, dove tail
- 14: second assembling face, dove tail retainer
- 15: first assembling face, T-bar
- 16: second assembling face, T-bar retainer
- 17: additional fitting element, metal pin
- 18: first hole
- 18': first center axis
- 19: second hole
- 19': second center axis
- 20: wrap- around section
- 21: supporting face
- 22: mushroom head
- 23: mushroom head retainer

- α: angle
- R: axis of rotation

## Claims

1. A crankshaft (1) for an internal combustion machine having crank webs (10) in between bearing journals (11a, 11b) comprising at least one pin bearing journal (11a) and main bearing journals (11b) defining an axis of rotation (R) of the crankshaft (1), whereas the crank webs (10) feature assembled counterweights (12) for balancing at least the crankshaft (1), and whereas the crank webs (10) comprise a first assembling face (13, 15) and the counterweights (12) comprise a second assembling face (14, 16), whereas the first assembling face (13, 15) is arranged opposed to the pin bearing journal (11a) in relation to the axis of rotation (R), and whereas the first (13, 15) and the second assembling face (14, 16) feature a form-fitted connection between the crank web (10) and the counterweight (12), the crank webs (10) feature at least one first hole (18) and the counterweights (12) feature at least one second hole (19) in a complimentary arrangement of the first hole (18), whereas an additional fitting element (17) is inserted in the holes (18, 19) and extends both into the first hole (18) and into the second hole (19), **characterised in that** the first hole (18) features a first center axis (18') and the second hole (19) features a second center axis (19'), whereas the center axes (18', 19') are angular misaligned to each other and the additional fitting element (17) is fitted into the holes (18, 19) under an elastic and/or a plastic material strain.

2. A crank shaft (1) according to claim 1, **characterized in that** the form-fitted connection between the counterweights (12) and the crank webs (10) comprises a dove tail connection (13, 14) with a dove tail (13) formed by the first assembling face (13) and a dove tail retainer (14) formed by the second assembling face (14).

3. A crank shaft (1) according to claim 1, **characterized in that** the form-fitted connection between the counterweights (12) and the crank webs (10) comprises a T- bar connection (15, 16) with a T-bar (15) formed by the first assembling face (15) and a T- bar retainer (16) formed by the second assembling face (16).

4. A crank shaft (1) according to claim 1, **characterized in that** the form-fitted connection between the counterweights (12) and the crank webs (10) comprises a mushroom head geometry with a mushroom head (22) formed by the first assembling face and a mushroom head retainer (23) formed by the second assembling face.

5. A crank shaft (1) according to one of the previous claims, **characterized in that** the additional fitting element (17) is formed by a metal pin (17).

6. A crank-shaft (1) according to one of the previous claims, **characterized in that** the misalignment angle (α) between the first center axis (18') and the second center axis (19') amounts to 0,01° to 5°, preferably to 0,1° to 1° and most preferred to 0,25°.

7. A crank-shaft (1) according to one of the previous claims, **characterized in that** the at least one first hole (18) in the crank web (10) is performed as a stud hole and the at least one second hole (19) in the counterweight (12) is performed as a through bore-hole.

8. A crank-shaft (1) according to one of the previous claims, **characterized in that** the first hole (18) in the crank web (10) performed as a stud hole is located in the lateral face of the dove tail (13) and the second hole (19) in the counterweight (12) performed as a through bore-hole is located in the wrap-around section (20) of the dove tail retainer (14).

9. A crank-shaft (1) according to one of the previous claims, **characterized in that** the material of the counterweights (12) is less noble than the material of the crankshaft (1).

## Patentansprüche

1. Kurbelwelle (1) für eine Brennkraftmaschine mit Kurbelwangen (10) zwischen Lagerzapfen (11a, 11b), die mindestens einen Hubzapfen (11a) und Hauptlagerzapfen (11b), die eine Drehachse (R) der Kurbelwelle (1) definieren, umfassen, wobei die Kurbelwangen (10) montierte Gegengewichte (12) zum Auswuchten zumindest der Kurbelwelle (1) aufweisen und wobei die Kurbelwangen (10) eine erste Montagefläche (13, 15) umfassen und die Gegengewichte (12) eine zweite Montagefläche (14, 16) umfassen, wobei die erste Montagefläche (13, 15) gegenüber dem Hubzapfen (11a) bezüglich der Drehachse (R) angeordnet ist und wobei die erste (13, 15) und die zweite Montagefläche (14, 16) eine formschlüssige Verbindung zwischen der Kurbelwange (10) und dem Gegengewicht (12) aufweisen, wobei die Kurbelwangen (10) mindestens eine erste Bohrung (18) aufweisen und die Gegengewichte (12) mindestens eine zweite Bohrung (19) in einer zur ersten Bohrung (18) komplementären Anordnung aufweisen, wobei ein zusätzliches Verbindungselement (17) in den Bohrungen (18, 19) eingesetzt ist und sich sowohl in die erste Bohrung (18) als auch in die zweite Bohrung (19) erstreckt,
**dadurch gekennzeichnet, dass** die erste Bohrung (18) eine erste Mittelachse (18') aufweist und die zweite Bohrung (19) eine zweite Mittelachse (19') aufweist, wobei die Mittelachsen (18' 19') zueinander winkelförmig versetzt sind und das zusätzliche Verbindungselement (17) unter einer elastischen und/oder einer plastischen Materialbeanspruchung in die Bohrungen (18, 19) eingepasst ist.

2. Kurbelwelle (1) nach Anspruch 1, **dadurch gekennzeichnet, dass** die formschlüssige Verbindung zwischen den Gegengewichten (12) und den Kurbelwangen (10) eine Schwalbenschwanzverbindung (13, 14) umfasst, wobei ein Schwalbenschwanz (13) durch die erste Montagefläche (13) gebildet wird und eine Schwalbenschwanzhalterung (14) durch die zweite Montagefläche (14) gebildet wird.

3. Kurbelwelle (1) nach Anspruch 1, **dadurch gekennzeichnet, dass** die formschlüssige Verbindung zwischen den Gegengewichten (12) und den Kurbelwangen (10) eine T-Stangenverbindung (15, 16) umfasst, wobei eine T-Stange (15) durch die erste Montagefläche (15) gebildet wird und eine T-Stangenhalterung (16) durch die zweite Montagefläche (16) gebildet wird.

4. Kurbelwelle (1) nach Anspruch 1, **dadurch gekennzeichnet, dass** die formschlüssige Verbindung zwischen den Gegengewichten (12) und den Kurbelwangen (10) eine Pilzkopfgeometrie umfasst, wobei ein Pilzkopf (22) durch die erste Montagefläche gebildet wird und eine Pilzkopfhalterung (23) durch die zweite Montagefläche gebildet wird.

5. Kurbelwelle (1) nach einem der vorhergehenden Ansprüche, **dadurch gekennzeichnet, dass** das zusätzliche Verbindungselement (17) durch einen Metallstift (17) gebildet wird.

6. Kurbelwelle (1) nach einem der vorhergehenden Ansprüche, **dadurch gekennzeichnet, dass** der Versetzungswinkel (α) zwischen der ersten Mittelachse (18') und der zweiten Mittelachse (19') 0,01° bis 5°, vorzugsweise 0,1° bis 1° und am stärksten bevorzugt 0,25°, beträgt.

7. Kurbelwelle (1) nach einem der vorhergehenden Ansprüche, **dadurch gekennzeichnet, dass** die mindestens eine erste Bohrung (18) in der Kurbelwange (10) als eine Sackbohrung ausgeführt ist und die mindestens eine zweite Bohrung (19) in dem Gegengewicht (12) als eine Durchgangsbohrung ausgeführt ist.

8. Kurbelwelle (1) nach einem der vorhergehenden Ansprüche, **dadurch gekennzeichnet, dass** die erste Bohrung (18) in der Kurbelwange (10), die als eine Sackbohrung ausgeführt ist, in der lateralen Seite des Schwalbenschwanzes (13) positioniert ist und die zweite Bohrung (19) in dem Gegengewicht (12), die als eine Durchgangsbohrung ausgeführt ist, in dem Umschließungsbereich (20) der Schwalbenschwanzhalterung (14) positioniert ist.

9. Kurbelwelle (1) nach einem der vorhergehenden Ansprüche, **dadurch gekennzeichnet, dass** das Material der Gegengewichte (12) weniger hochwertig als das Material der Kurbelwelle (1) ist.

## Revendications

1. Vilebrequin (1) pour un moteur à combustion interne comportant des bras de vilebrequin (10) entre des portées (11a, 11b) comprenant au moins un maneton (11a) et des tourillons (11b) définissant un axe de rotation (R) du vilebrequin (1), les bras de vilebrequin (10) comprenant des masses d'équilibrage (12) assemblées servant à équilibrer au moins le vilebrequin (1), et les bras de vilebrequin (10) comprenant une première face d'assemblage (13, 15) et les masses d'équilibrage (12) comprenant une seconde face d'assemblage (14, 16), la première face d'assemblage (13, 15) étant disposée à l'opposé du maneton (11a) par rapport à l'axe de rotation (R), et les première (13, 15) et seconde (14, 16) faces d'assemblage comprenant un raccordement par accouplement géométrique entre le bras de vilebrequin (10) et la masse d'équilibrage (12), les bras de vilebrequin (10) comprenant au moins un premier trou (18) et les masses d'équilibrage (12) comprenant au moins un second trou (19) disposé de manière complémentaire vis-à-vis du premier trou (18), un élément d'accouplement (17) supplémentaire étant inséré dans les trous (18, 19) et s'étendant à la fois dans le premier trou (18) et dans le second trou (19), **caractérisé en ce que** le premier trou (18) comprend un premier axe central (18') et le second trou (19) comprend un second axe central (19'), les axes centraux (18', 19') étant angulairement désalignés l'un vis-à-vis de l'autre et l'élément d'accouplement (17) supplémentaire étant logé dans les trous (18, 19) sous une contrainte matérielle élastique et/ou plastique.

2. Vilebrequin (1) selon la revendication 1, **caractérisé en ce que** le raccordement par accouplement géométrique entre les masses d'équilibrage (12) et les bras de vilebrequin (10) comprend un raccordement en queue d'aronde (13, 14) avec une queue d'aronde (13) formée par la première face d'assemblage (13) et un élément de retenue de queue d'aronde (14) formé par la seconde face d'assemblage (14).

3. Vilebrequin (1) selon la revendication 1, **caractérisé en ce que** le raccordement par accouplement géométrique entre les masses d'équilibrage (12) et les bras de vilebrequin (10) comprend un raccordement à profilé en T (15, 16) avec un profilé en T (15) formé par la première face d'assemblage (15) et un élément de retenue de profilé en T (16) formé par la seconde face d'assemblage (16).

4. Vilebrequin (1) selon la revendication 1, **caractérisé en ce que** le raccordement par accouplement géométrique entre les masses d'équilibrage (12) et les bras de vilebrequin (10) comprend une géométrie à tête de champignon avec une tête de champignon (22) formée par la première face d'assemblage et un élément de retenue de tête de champignon (23) formé par la seconde face d'assemblage.

5. Vilebrequin (1) selon l'une des revendications précédentes, **caractérisé en ce que** l'élément d'accouplement (17) supplémentaire est formé par une goupille en métal (17).

6. Vilebrequin (1) selon l'une des revendications précédentes, **caractérisé en ce que** l'angle de désalignement (α) entre le premier axe central (18') et le second axe central (19') est de 0,01° à 5°, de préférence de 0,1° à 1° et le plus préférablement de 0,25°.

7. Vilebrequin (1) selon l'une des revendications précédentes, **caractérisé en ce que** le ou les premiers trous (18) dans le bras de vilebrequin (10) sont réalisés sous la forme d'un trou borgne et le ou les seconds trous (19) dans la masse d'équilibrage (12) sont réalisés sous la forme d'un trou traversant.

8. Vilebrequin (1) selon l'une des revendications précédentes, **caractérisé en ce que** le premier trou (18) dans le bras de vilebrequin (10) réalisé sous la forme d'un trou borgne se trouve dans la face latérale de la queue d'aronde (13) et le second trou (19) dans la masse d'équilibrage (12) réalisé sous la forme d'un trou traversant se trouve dans la section d'enveloppement (20) de l'élément de retenue de queue d'aronde (14).

9. Vilebrequin (1) selon l'une des revendications précédentes, **caractérisé en ce que** le matériau des masses d'équilibrage (12) est moins noble que le matériau du vilebrequin (1).
